# EUROPÄISCHE PATENTANMELDUNG

(11) **EP 3 821 689 A1**
(43) Veröffentlichungstag der Anmeldung: **19.05.2021**
(21) Anmeldenummer: 20000381.2
(22) Anmeldetag: 21.10.2020
(51) Int. Cl.: A01C 23/00, A01M 7/00, A01B 79/00, A01C 21/00

(54) **FÖRDERANORDNUNG FÜR WIRTSCHAFTSDÜNGER SOWIE COMPUTERPROGRAMMPRODUKT UND VERFAHREN ZUM AUSBRINGEN VON WIRTSCHAFTSDÜNGER**

(30) Priorität: 06.11.2019 DE 102019007686
(71) Anmelder: Zunhammer, Sebastian, 83301 Traunreut (DE)
(72) Erfinder: Zunhammer, Sebastian, 83301 Traunreut (DE)
(74) Vertreter: Einsiedler, Johannes

(57) **Zusammenfassung**

Die Erfindung betrifft eine Förderanordnung (1) für Wirtschaftsdünger, insbesondere für Gülle, für ein landwirtschaftliches Fahrzeug, mit mindestens einer Druckleitung (2, 3) für Wirtschaftsdünger, einem mit Dünger befüllbaren Tank (4), zumindest zwei Verteilerköpfen (5, 6) zum Ausbringen des Düngers auf eine landwirtschaftliche Nutzfläche, zwei unabhängig voneinander schaltbaren Wegeventilen (7, 8) stromauf der zumindest zwei Verteilerköpfe (5,6), mindestens einer Steuervorrichtung (9) und mindestens zwei Fördermitteln (10, 11) wobei mindestens zwei der Fördermittel (10, 11) unabhängig voneinander fluidtechnisch, elektrisch und/oder elektromechanisch antreibbar sind, sowie ein Computerprogrammprodukt und ein Verfahren zum Ausbringen von Wirtschaftsdünger.

## Beschreibung

Die vorliegende Erfindung betrifft eine Förderanordnung für Wirtschaftsdünger, insbesondere für Gülle, für ein landwirtschaftliches Fahrzeug, mit mindestens einer Druckleitung für Wirtschaftsdünger, einem mit Dünger befüllbaren Tank, zumindest zwei Verteilerköpfen zum Ausbringen des Düngers auf eine landwirtschaftliche Nutzfläche, zwei unabhängig voneinander schaltbaren Wegeventilen stromauf der zumindest zwei Verteilerköpfe, mindestens einer Steuervorrichtung und mindestens zwei Fördermitteln, sowie ein Computerprogrammprodukt und ein Verfahren zum Ausbringen von Wirtschaftsdünger.

Eine Förderanordnung für Wirtschaftsdünger, insbesondere für Gülle, für ein landwirtschaftliches Fahrzeug umfasst im Allgemeinem einen Tank für den Wirtschaftsdünger, mindestens einen Verteilerkopf zum Ausbringen des Düngers auf eine landwirtschaftliche Nutzfläche und mindestens ein Fördermittel zum Fördern des Wirtschaftsdüngers. Durch die Fördermittel wird der Wirtschaftsdünger und über eine Leitung aus dem Tank gefördert, mit Druck beaufschlagt und über weitere Leitungen zu den Verteilerköpfen gefördert. Über die Verteilerköpfe wird der Dünger dann auf die landwirtschaftliche Fläche verteilt. Die Fördermittel sind üblicherweise Pumpen, die über ein mechanisches Getriebe von einer Zapfwelle des Fahrzeugs oder eines Zugfahrzeugs angetrieben werden.

Beispielsweise ist aus der EP 2 289 300 A1 eine Förderanordnung für Wirtschaftsdünger mit zwei Pumpen als Fördereinrichtungen und zwei Verteilerköpfen bekannt. Die Pumpen laufen dabei parallel und sind über ein Getriebe und eine Gelenkwelle von einer Zapfwelle angetrieben. Die Ausbringmenge der Gülle kann dabei innerhalb bestimmter Grenzen angepasst werden, z.B. indem die Zuleitung von Gülle zu einem der Verteilerköpfe unterbrochen wird. Dadurch wird jedoch entweder die Ausbringmenge am zweiten Verteilerkopf erhöht, oder Dünger im Kreis gepumpt. Dies erschwert wiederum die Dosierung auf der Seite des zweiten Verteilerkopfes oder benötigt unnötig viel Energie und kann zudem durch unnötige Bewegung die Zusammensetzung des Düngers beeinflussen.

Mit den bekannten Förderanordnungen ist eine Anpassung der Ausbringmenge an Wirtschaftsdünger einerseits nur innerhalb bestimmter Grenzen möglich und andererseits während einer Feldfahrt mit einigem Aufwand verbunden. Zudem werden Auflagen für einzuhaltende Grenzwerte von zulässigen Ausbringmengen je Flächeneinheit stetig angepasst. Des Weiteren ist es mit den bekannten Förderanordnungen nur begrenzt und mit einigem Aufwand möglich, die Ausbringmenge spezifisch an unterschiedliche Bodeneigenschaften innerhalb eines Feldes anzupassen und partielles Überdüngen zu verhindern.

Der Erfindung liegt die Aufgabe zugrunde, eine gattungsgemäße Förderanordnung für Wirtschaftsdünger, insbesondere Gülle, dahingehend weiterzubilden, dass die vorstehend genannten Nachteile vermieden werden und insbesondere eine Ausbringmenge vorteilhafter angepasst werden kann.

Diese Aufgabe wird erfindungsgemäß durch den Gegenstand des Anspruchs 1 gelöst, sowie durch ein Computerprogrammprodukt nach Anspruch 11 und ein Verfahren nach Anspruch 13. Vorteilhafte Ausführungsformen sind Gegenstand der abhängigen Ansprüche.

Die erfindungsgemäße Förderanordnung für Wirtschaftsdünger, insbesondere für Gülle, für ein landwirtschaftliches Fahrzeug, ist mit mindestens einer Druckleitung für Wirtschaftsdünger, einem mit Dünger befüllbaren Tank, zumindest zwei Verteilerköpfen zum Ausbringen des Düngers auf eine landwirtschaftliche Nutzfläche, zwei unabhängig voneinander schaltbaren Wegeventilen stromauf der zumindest zwei Verteilerköpfe mindestens einer Steuervorrichtung und mindestens zwei Fördermitteln zum Fördern des Wirtschaftsdüngers ausgestattet. Erfindungsgemäß sind dabei mindestens zwei der Fördermittel unabhängig voneinander fluidtechnisch, elektrisch und/oder elektromechanisch antreibbar. Damit kann erstmals ein gesamter Düngerstrom zu einem der Verteilerköpfe unabhängig vom Düngerstrom zu einem der anderen Verteilerköpfe reduziert werden. Dadurch entsteht kein Einfluss auf die Ausbringmenge an einem weiteren Verteilerkopf und auf ein unnötiges Pumpen des Düngers im Kreis kann vollständig verzichtet werden. So kann auf einen einseitig reduzierten Düngerbedarf auch für nur wenige Meter einer Feldfahrt sehr einfach und schnell reagiert und die Ausbringmenge energiesparend und komfortabel angepasst werden. Da hierzu kein teures und schweres umschaltbares Getriebe nötig ist, kann das Gesamtgewicht der Fördereinrichtung reduziert werden. Zudem kann auf ein Ankoppeln einer schweren Gelenkwelle verzichtet werden. Die Antriebsenergie kann beispielsweise von einem Hydraulikkreis, einem Druckluftkreis und/oder einem elektrischen Bordnetz stammen, der/das an einem Zugfahrzeug, oder der Antriebseinheit bei einer selbstfahrenden Fördereinrichtung, bereits vorhanden ist. Auch dies kann sich Vorteilhaft auf das Gesamtgewicht auswirken und gleichermaßen den Aufwand für ein Ankoppeln verringern.

In einer vorteilhaften Weiterbildung der erfindungsgemäßen Lösung ist die Steuervorrichtung eingerichtet, eine Drehzahl mindestens eines der Fördermittel zu steuern. Dadurch kann auf sehr einfache und energiesparende Weise der Düngerstrom zu einem oder allen der Verteilerköpfe variiert werden. So kann die Ausbringmenge der Gülle je Verteilerkopf sehr einfach und schnell in einem sehr großen Umfang variiert werden. Dabei kann die Ausbringmenge an dem/den anderen Verteilerkopf/Verteilerköpfen sehr einfach konstant gehalten, oder ebenfalls variiert werden. Dies ermöglicht es, die Düngermenge spezifisch an unterschiedliche Bodeneigenschaften innerhalb eines Feldes anzupassen.

In einer weiteren vorteilhaften Weiterbildung der erfindungsgemäßen Lösung ist mindestens eines der Fördermittel so eingerichtet und ausgelegt, dass die Drehzahl eines und/oder beider Fördermittel bevorzugt stufenlos, insbesondere während einer Fahrt, bis auf 0 U/min reduziert ansteuerbar ist. Dadurch kann einerseits beim Anhalten und/oder Anfahren die Ausbringmenge auf sehr einfache Weise so angepasst werden, dass eine partielle Überdüngung ausgeschlossen werden kann. Insbesondere kann die Drehzahl von einer maximal am Fördermittel technisch möglichen Maximaldrehzahl und/oder einer Nenndrehzahl des Fördermittels bis auf 0 U/min reduziert werden. Andererseits kann dadurch die Ausbringmenge je Verteilerkopf besonders einfach und effektiv an unterschiedliche Erfordernisse angepasst werden. Beispielsweise bei Kurvenfahrten, beim Wenden, oder beim Abfahren eines Bogens kann es erforderlich sein, die Menge am kurveninneren Verteiler relativ zum kurvenäußeren Verteiler zu reduzieren. Das kann durch die bis auf 0 U/min reduziert ansteuerbare Drehzahl eines der beiden Fördermittel, nämlich des je kurveninneren Fördermittels, unabhängig vom anderen Fördermittel besonders einfach und effektiv erreicht werden. Durch eine stufenweise Reduzierung der Drehzahl kann besonders einfach und durch eine stufenlose Reduzierung besonders präzise eine Fördermenge z.B. beim Füllen des Tanks im Stand angepasst werden und Schwappen beim Füllen verhindert werden. Die stufenlose Anpassung ermöglicht insbesondere beim Anfahren, Anhalten und einer Langsamfahrt eine besonders gleichmäßige Ausbringmenge bei besonders geringem Energieeinsatz. Dadurch wird es möglich, die Düngermenge spezifisch auch an nur sehr geringfügig unterschiedliche Bodeneigenschaften innerhalb eines Feldes vorteilhaft effektiv anzupassen. Dies ist besonders von Vorteil, wenn genaue Daten über die Bodenbeschaffenheit vorliegen, die z.B. aus Satelliten / Satellitenbildanalysen erhältlich sind. Aus diesen Daten kann sich z.B. ergeben, dass auch bei einer Geradeausfahrt unterschiedliche Erfordernisse für die Ausbringmenge je Verteilerkopf vorliegen, z.B. durch erfassten, partiell unterschiedlich starken Pflanzenwuchs, der durch die sehr geringfügig unterschiedlichen Bodeneigenschaften innerhalb des Feldes hervorgerufen sein kann. Die Ausbringmenge kann durch die bis auf 0 U/min reduziert ansteuerbare Drehzahl eines der beiden Fördermittel unabhängig vom anderen Fördermittel auch auf solche Erfordernisse besonders einfach und effektiv angepasst werden. Durch die stufenlose Reduzierung der Drehzahl eines oder beider Fördermittel kann dann die Düngemenge sehr genau an die Bodenbeschaffenheit angepasst werden. Damit können auch die in Zukunft möglicherweise weiter erhöhten Auflagen für einzuhaltende Grenzwerte der Ausbringmenge zuverlässig eingehalten werden.

In einer weiteren vorteilhaften Weiterbildung der erfindungsgemäßen Lösung ist stromab oder an einem der Verteilerköpfe mindestens eine Durchflussdrosselvorrichtung angeordnet. Unter einer Drosselvorrichtung ist dabei insbesondere eine Vorrichtung zu verstehen, die den Durchfluss stufenlos oder gestuft reduziert, insbesondere bis zu einem vollständigen Absperren des Durchflusses. Dadurch kann die Abgabemenge in einem bestimmten Teil einer Gesamtbreite eines Verteilerkopfes reduziert werden. So kann beispielsweise auf einem Drittel oder auf einer Hälfte der Breite einer Gesamtbreite die Ausbringmenge reduziert werden. Insbesondere in Kombination mit der Regelung der Drehzahl mindestens eines der Fördermittel kann so auch auf kleinräumige Abweichungen der Bodeneigenschaften innerhalb eines Feldes präzise reagiert und die Ausbringmenge entsprechend angepasst werden.

In einer weiteren vorteilhaften Weiterbildung der erfindungsgemäßen Lösung ist stromab der Verteilerköpfe und Stromauf je einer Abgabeöffnung je eine Durchflussdrosseleinrichtung angeordnet. Dies ermöglicht es, auch auf kleinsträumige Abweichungen der Bodeneigenschaften innerhalb eines Feldes besonders präzise zu reagieren. Damit kann die gesamt durch die Fördermittel geförderte Menge an Wirtschaftsdünger optimal auf jeden Teilbereich der Gesamtbreite optimal verteilt werden.

In einer weiteren vorteilhaften Weiterbildung der erfindungsgemäßen Lösung ist jede der Durchflussdrosseleinrichtungen durch die Steuervorrichtung einzeln oder gruppenweise steuerbar. Dadurch ist die optimale Verteilung der geförderten Menge an Wirtschaftsdünger auf jeden Teilbereich der Gesamtfläche besonders einfach möglich. So kann die Ausbringmenge besonders einfach auch auf kleinsträumige Abweichungen der Bodeneigenschaften innerhalb des Feldes besonders präzise angepasst werden.

In einer weiteren vorteilhaften Weiterbildung der erfindungsgemäßen Lösung ist die Steuervorrichtung eingerichtet, mindestens eines der Fördermittel mindestens eines der Wegeventile und/oder mindestens eine der Durchflussdrosselvorrichtungen in Abhängigkeit mindestens eines Kennwerts einer digitalen Düngekarte anzusteuern. Dies kann insbesondere eine sogenannte Dosieranweisung darstellen. Die Steuervorrichtung kann dann für jeden Punkt auf einem Feld die genau auszubringende Sollmenge an Dünger bestimmen und z.B. in Abhängigkeit von einer Fahrgeschwindigkeit eines der Fördermittel mindestens eines der Wegeventile und/oder mindestens eine der Durchflussdrosselvorrichtungen so ansteuern, dass eine optimale Düngung erreicht wird. Insbesondere kann bei geringen erforderlichen Ausbringmengen die Fördermenge eines Fördermittels für die gesamte Ausbringmenge auf der Gesamtbreite ausreichen und die Fördermittel und zumindest die Wegeventile entsprechend angesteuert werden. So kann ein besonders energiesparender Betrieb ermöglicht werden.

In einer weiteren vorteilhaften Weiterbildung der erfindungsgemäßen Lösung ist die Steuervorrichtung eingerichtet und programmiert, in einem Ansaugbetrieb zu einem Befüllen des Tanks mindestens ein schaltbares Ansaugventil, mindestens eines der schaltbaren Wegeventile und die Drehzahl mindestens eines der Fördermittel zu steuern. Dadurch kann eine Füllung des Tanks in einem ersten Teilbereich auf besonders einfache und schnelle Weise erfolgen. In einem zweiten Teilbereich, z.B. den letzten 3%, kann eine besonders sparsam mit z.B. nur einem angetriebenen Fördermittel eine besonders genaue und vollständige Erreichung der gewünschten Füllmenge erfolgen.

In einer weiteren vorteilhaften Weiterbildung der erfindungsgemäßen Lösung ist mindestens eines der Fördermittel hydraulisch und/oder Pneumatisch antreibbar. Dadurch können besonders vorteilhafte Drehzahlbereiche bei geringen Baugrößen der Fördermittel erreicht werden und gleichermaßen leicht und flexibel verlegbare und anschließbare Zuleitungen genutzt werden.

In einer weiteren vorteilhaften Weiterbildung der erfindungsgemäßen Lösung ist mindestens eines der Fördermittel ein Hydraulikmotor, insbesondere ein Ölmotor. Dies ermöglicht es, ein an einer Zugmaschine oder einer Antriebseinheit bereits vorhandenes und leicht zugängliches sowie einfach und sicher anzuschließendes Zuleitungssystem zu nutzen.

Eine weitere Lösung für die genannte Aufgabe stellt ein Computerprogrammprodukt bereit, das Befehle umfasst, die bewirken, dass aus Satellitenbildanalyse extrahierte Feldkennwertdaten, die in eine digitale Düngekarte verrechnet sind oder werden, in eine einer Steuervorrichtung einer Förderanordnung für Wirtschaftsdünger übertragen werden. Dadurch können auf besonders einfache und komfortable Weise kostenfrei zur Verfügung gestellte Satellitenbilddaten dazu genutzt werden, eine besonders effektive und gleichermaßen umweltschonende Düngemittelverteilung zu erreichen.

Unter einer digitalen Düngekarte ist insbesondere ein digitales Abbild einer Ausbringfläche zu verstehen, das in ein Raster eingeteilt ist. Für jeden Punkt oder jede Teilfläche des Rasters kann eine spezifische Düngemenge festgelegt sein. Die spezifische Düngemenge kann beispielsweise über eine Satellitenbildanalyse der Ausbringfläche bestimmt werden und partielle Wachstumsunterschiede berücksichtigen. Jedem Punkt oder jeder Teilfläche des Rasters kann ein spezifischer GPS-Datensatz, GLONASS und/oder GALILEO-Datensatz, d.h. georeferenziert, zugeordnet sein.

In einer vorteilhaften Weiterbildung umfasst das Computerprogrammprodukt Befehle, die bewirken, dass georeferenzierte Daten, d.h. GPS-Daten, GLONASS- und/oder GALILEO-Daten über die Position der erfindungsgemäßen Förderanordnung mit der digitalen Düngekarte abgeglichen werden und eine Dosieranweisung für die Steuereinrichtung in Abhängigkeit der Position der Förderanordnung und einem Kennwert der digitalen Düngekarte, der dieser Position zugeordnet ist, bestimmt wird. So kann auf besonders einfache Weise sichergestellt werden, dass die errechnete optimale Düngemittelverteilung auch auf der optimal passenden Stelle des Feldes aufgebracht wird.

Eine weitere Lösung für die gennannte Aufgabe stellt ein Verfahren zum Ausbringen von Wirtschaftsdünger, insbesondere von Gülle, umfassend ein Bewegen einer erfindungsgemäßen Förderanordnung auf einer Ausbringfläche, und/oder nach einer Dosieranweisung, basierend auf Daten, die mit einem der vorhergehend beschriebenen Computerprogrammprodukte verarbeitet sind. Dabei kann durch einfaches Abfahren der Ausbringfläche, auch mit unterschiedlicher oder inkonstanter Geschwindigkeit, oder bei mehrfachem Überfahren von Teilbereichen, z.B. beim Wenden, eine errechnete optimale Düngemittelverteilung auf der optimal passenden Stelle des Feldes erreicht werden.

Ein Ausführungsbeispiel der Erfindung ist in den Figuren rein schematisch dargestellt und wird nachfolgend näher beschrieben. Es zeigen:
- Fig. 1: eine Draufsicht auf eine schematisch dargestellte erfindungsgemäße Förderanordnung für Wirtschaftsdünger,
- Fig. 2: eine Darstellung wie in Fig. 1 mit angezeigter Düngerstromrichtung in einem Düngebetrieb, und
- Fig. 3: eine Darstellung wie in Fig. 1 mit angezeigter Düngerstromrichtung in einem Ansaugbetrieb zu einem Befüllen des Tanks.

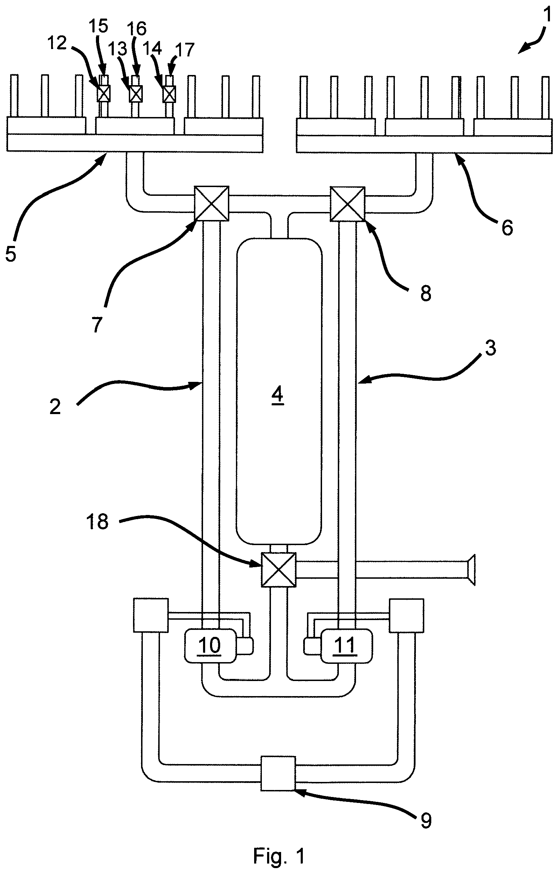

Figur 1 zeigt eine erfindungsgemäße Förderanordnung 1 für Wirtschaftsdünger, insbesondere für Gülle, für ein landwirtschaftliches Fahrzeug in der Draufsicht. Sie umfasst eine rechte Druckleitung 2 und eine linke Druckleitung 3 für Wirtschaftsdünger und einen mit Dünger befüllbaren Tank 4. Am hinteren Ende sind ein rechter und ein linker Verteilerkopf 5, 6 zum Ausbringen des Düngers auf eine landwirtschaftliche Nutzfläche zu erkennen, sowie ein rechtes und ein linkes schaltbares Wegeventil 7, 8, die unabhängig voneinander schaltbar und Stromauf der zwei Verteilerköpfe 5, 6 angeordnet sind. Die Steuervorrichtung 9 ist im vorderen Bereich der Förderanordnung 1 zu erkennen, sowie ein rechtes Fördermittel 10 und ein linkes Fördermittel 11, mit denen der Wirtschaftsdünger gefördert wird. Die zwei Fördermittel 10, 11 sind unabhängig voneinander fluidtechnisch antreibbar. Dazu sind beide Fördermittel 10, 11 als unabhängig ansteuerbare und antreibbare Ölmotoren ausgeführt.

Die Steuervorrichtung 9 ist eingerichtet, eine Drehzahl der Fördermittel 10, 11 zu steuern. Die Fördermittel 10, 11 sind durch ihre Ausführung als unabhängige Hydraulikmotoren, genauer als unabhängige Ölmotoren, so eingerichtet und ausgelegt, dass ihre Drehzahl stufenlos, insbesondere während einer Fahrt, bis auf 0 U/min reduziert ansteuerbar ist. Dadurch kann einerseits beim Anhalten und/oder Anfahren eine Menge an ausgebrachtem Wirtschaftsdünger auf sehr einfache Weise so angepasst werden, dass eine partielle Überdüngung ausgeschlossen wird. Andererseits kann dadurch die Ausbringmenge je Verteilerkopf 5, 6 besonders einfach und effektiv an unterschiedliche Erfordernisse angepasst werden. Bei Kurvenfahrten, beim Wenden, oder beim Abfahren eines Bogens ist es im vorliegenden Beispiel erforderlich, die Menge am kurveninneren Verteiler 5 oder 6 relativ zum kurvenäußeren Verteiler 6 oder 5 zu reduzieren. Das kann durch die bis auf 0 U/min reduziert ansteuerbare Drehzahl eines der beiden Fördermittel 10, 11 unabhängig vom anderen Fördermittel 11, 10 besonders einfach und effektiv erreicht werden. Durch die stufenweise Reduzierung der Drehzahl kann eine Fördermenge in der rechten Druckleitung 2 und/oder der linken Druckleitung 3 besonderes einfach angepasst werden.

Die beiden schematisch dargestellten und als Ölmotoren ausgeführten Fördermittel 10, 11 arbeiten nach dem Prinzip einer Verdrängerpumpe. Sie weisen je ein spezifisches sogenanntes Schluckvolumen auf. Die geförderte Menge an Wirtschaftsdünger ist dadurch je direkt von der Drehzahl abhängig, mit der sie angesteuert werden.

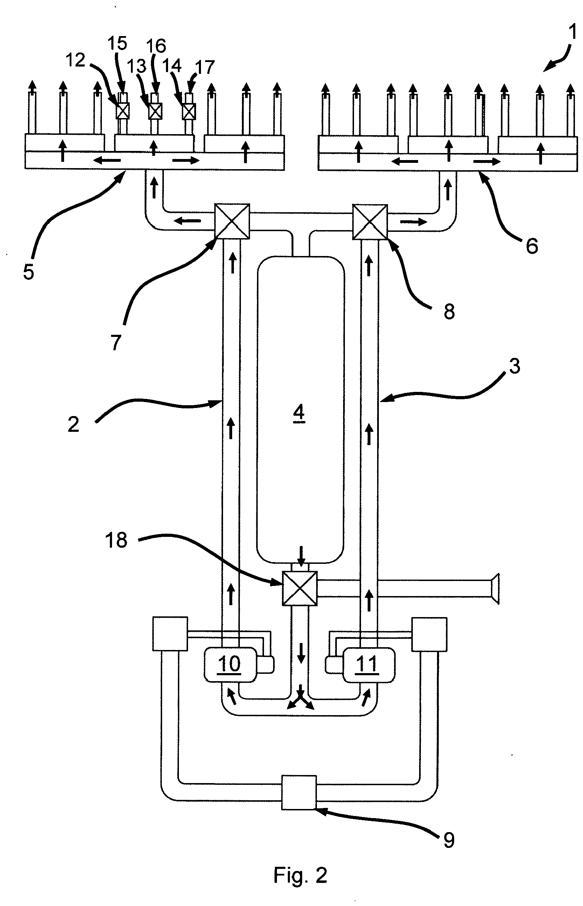

In Figur 2 ist durch Pfeile ein Strömungsverlauf des Wirtschaftsdüngers bei einer Ausbringfahrt auf einer Ausbringfläche, insbesondere nach dem erfindungsgemäßen Verfahren, dargestellt. Dabei sind die am rechten Verteilerkopf 5 angeordneten Durchflussdrosselvorrichtungen 12, 13, 14 in einer Dreiergruppe von der Steuervorrichtung 9 vollständig gedrosselt. Diese sind stromab des Verteilerkopfs 5 und Stromauf der Abgabeöffnungen 15, 16 und 17 angeordnet. Da sie vollständig gedrosselt sind, tritt aus den Abgabeöffnungen 15, 16 und 17 kein Dünger aus.

In der Steuervorrichtung 9 wird dazu ein Computerprogrammprodukt ausgeführt, das nicht dargestellte Befehle umfasst, die bewirken, dass aus einer Satellitenbildanalyse extrahierte Feldkennwertdaten, die in eine nicht dargestellte digitale Düngekarte verrechnet sind, in die Steuervorrichtung 9 übertragen werden.

Das Computerprogrammprodukt umfasst Befehle, die bewirken, dass georeferenzierte Daten, d.h. GPS-Daten, GLONASS- und/oder GALILEO-Daten über die Position der Förderanordnung 1 mit der digitalen Düngekarte abgeglichen werden und eine Dosieranweisung für die Steuereinrichtung 9 in Abhängigkeit der Position der Förderanordnung 1 und der einem Kennwert der digitalen Düngekarte, der dieser Position zugeordnet ist, bestimmt wird.

Dabei wird das linke Fördermittel 11 von der Steuereinrichtung 9 mit ihrer maximal möglichen Drehzahl angesteuert und das rechte Fördermittel 10 mit einer dem gegenüber um 30 % reduzierten Anzahl an Umdrehungen pro Minute. So wird die geförderte Menge an Wirtschaftsdünger schnell und energiesparend daran angepasst, dass durch die gedrosselten Durchflussdrosselvorrichtungen 12, 13, 14 über den rechten Verteilerkopf 5 aktuell eine geringere Menge an Wirtschaftsdünger abgegeben wird, als über den linken Verteilerkopf 6.

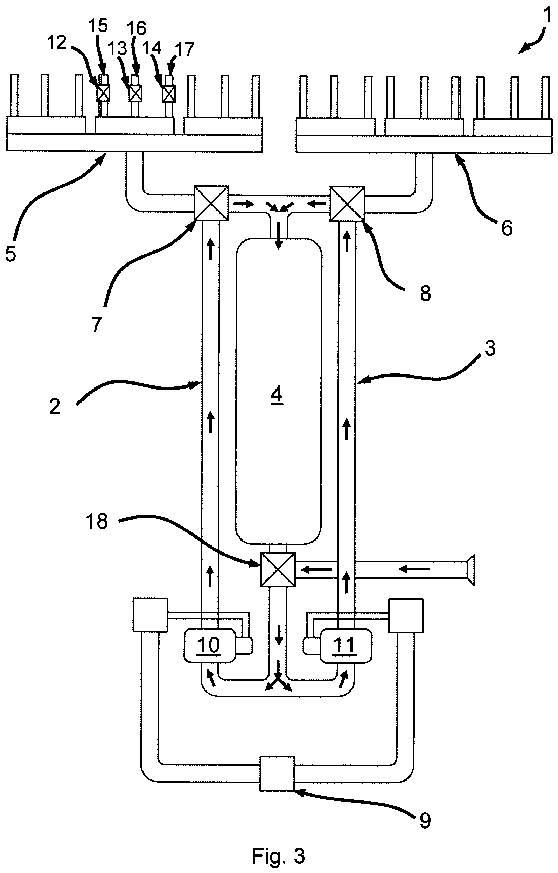

Dagegen zeigt Figur 3 durch Pfeile einen Strömungsverlauf des Wirtschaftsdüngers beim Füllen des Tanks im Stand in einem Ansaugbetrieb. Die Steuervorrichtung 9 steuert dazu ein schaltbares Ansaugventil 18, die schaltbaren Wegeventile 7, 8 und die Drehzahl mindestens der Fördermittel 10 und 11 an.

### Bezugszeichenliste

- 1: Förderanordnung
- 2: Druckleitung rechts
- 3: Druckleitung links
- 4: Tank
- 5: Verteilerkopf rechts
- 6: Verteilerkopfe links
- 7: Wegeventil rechts
- 8: Wegeventil links
- 9: Steuervorrichtung
- 10: Fördermittel rechts
- 11: Fördermittel links
- 12: Erste Durchflussdrosselvorrichtung
- 13: Zweite Durchflussdrosselvorrichtung
- 14: Dritte Durchflussdrosselvorrichtung
- 15: Erste Abgabeöffnung
- 16: Zweite Abgabeöffnung
- 17: Dritte Abgabeöffnung
- 18: schaltbares Ansaugventil

## Patentansprüche

1. Förderanordnung (1) für Wirtschaftsdünger, insbesondere für Gülle, für ein landwirtschaftliches Fahrzeug, mit mindestens einer Druckleitung (2, 3) für Wirtschaftsdünger, einem mit Dünger befüllbaren Tank (4), zumindest zwei Verteilerköpfen (5, 6) zum Ausbringen des Düngers auf eine landwirtschaftliche Nutzfläche, zwei unabhängig voneinander schaltbaren Wegeventilen (7, 8) stromauf der zumindest zwei Verteilerköpfe (5, 6), mindestens einer Steuervorrichtung (9) und mindestens zwei Fördermitteln (10, 11) zum Fördern des Wirtschaftsdüngers, **dadurch gekennzeichnet, dass** mindestens zwei der Fördermittel (10, 11) unabhängig voneinander fluidtechnisch, elektrisch und/oder elektromechanisch antreibbar sind.

2. Förderanordnung (1) nach Anspruch 1, **dadurch gekennzeichnet, dass** die Steuervorrichtung (9) eingerichtet ist, eine Drehzahl mindestens eines der Fördermittel (10, 11) zu steuern.

3. Förderanordnung (1) nach Anspruch 1 oder 2, **dadurch gekennzeichnet, dass** mindestens eines der Fördermittel (10, 11) dazu eingerichtet und ausgelegt ist, dass die Drehzahl eines und/oder beider Fördermittel (10, 11) bevorzugt stufenlos, insbesondere während einer Fahrt, bis auf 0 U/min reduziert ansteuerbar ist.

4. Förderanordnung (1) nach einem der Ansprüche 1 bis 3, **dadurch gekennzeichnet, dass** stromab oder an einem der Verteilerköpfe (5, 6) mindestens eine Durchflussdrosselvorrichtung (12, 13, 14) angeordnet ist.

5. Förderanordnung (1) nach einem der Ansprüche 1 bis 4, **dadurch gekennzeichnet, dass** stromab der Verteilerköpfe (5, 6) und Stromauf je einer Abgabeöffnung (15, 16, 17) je eine Durchflussdrosseleinrichtung (12, 13, 14) angeordnet ist.

6. Förderanordnung (1) nach Anspruch 4 oder 5, **dadurch gekennzeichnet, dass** jede der Durchflussdrosseleinrichtungen (12, 13, 14) durch die Steuervorrichtung (9) einzeln oder gruppenweise steuerbar ist oder sind.

7. Förderanordnung (1) nach einem der vorhergehenden Ansprüche, **dadurch gekennzeichnet, dass** die Steuervorrichtung (9) eingerichtet ist, mindestens eines der Fördermittel (10, 11), mindestens eines der Wegeventile (7, 8) und/oder mindestens eine der Durchflussdrosselvorrichtungen (12, 13, 14) in Abhängigkeit mindestens eines Kennwerts einer digitalen Düngekarte anzusteuern.

8. Förderanordnung (1) nach einem der vorhergehenden Ansprüche, **dadurch gekennzeichnet, dass** die Steuervorrichtung (9) eingerichtet und programmiert ist, in einem Ansaugbetrieb zu einem Befüllen des Tanks (4) mindestens ein schaltbares Ansaugventil (18), mindestens eines der schaltbaren Wegeventile (7, 8) und die Drehzahl mindestens eines der Fördermittel (10, 11) zu steuern.

9. Förderanordnung (1) nach einem der vorhergehenden Ansprüche, **dadurch gekennzeichnet, dass** mindestens eines der Fördermittel (10, 11) hydraulisch und/oder Pneumatisch antreibbar ist.

10. Förderanordnung (1) nach einem der vorhergehenden Ansprüche, **dadurch gekennzeichnet, dass** mindestens eines der Fördermittel (10, 11) ein Hydraulikmotor, insbesondere ein Ölmotor, ist.

11. Computerprogrammprodukt, umfassend Befehle, die bewirken, dass aus Satellitenbildanalyse extrahierte Feldkennwertdaten, die in eine digitale Düngekarte verrechnet sind oder werden, in eine Steuervorrichtung (9) einer Förderanordnung (1) für Wirtschaftsdünger, insbesondere einer Förderanordnung (1) nach Anspruch 1, übertragen werden.

12. Computerprogrammprodukt nach Anspruch 11, umfassend Befehle, die bewirken, dass georeferenzierte Daten, d.h. GPS-Daten, GLONASS- und/oder GALILEO-Daten, über die Position der Förderanordnung (1) nach Anspruch 1 mit der digitalen Düngekarte abgeglichen werden und eine Dosieranweisung für die Steuereinrichtung (9) in Abhängigkeit der Position der Förderanordnung (1) und einem Kennwert der digitalen Düngekarte, der dieser Position zugeordnet ist, bestimmt wird.

13. Verfahren zum Ausbringen von Wirtschaftsdünger, insbesondere von Gülle, umfassend ein Bewegen einer Förderanordnung (1) nach einen der vorhergehenden Ansprüche auf einer Ausbringfläche, und/oder nach einer Dosieranweisung, basierend auf Daten, die mit einem Computerprogrammprodukt nach Anspruch 11 oder 12 verarbeitet sind.
